# EUROPEAN PATENT SPECIFICATION

(11) **EP 3 517 276 B1**
(45) Date of publication and mention of the grant of the patent: **13.10.2021**
(21) Application number: 18153284.7
(22) Date of filing: 24.01.2018
(51) Int. Cl.: B29C 64/393, B33Y 50/02, B29C 64/153, B33Y 10/00, B22F 10/30, B22F 10/20, B22F 3/105, B33Y 30/00, B22F 1/00

(54) **METHOD FOR ADDITIVELY MANUFACTURING A THREE-DIMENSIONAL OBJECT**
VERFAHREN ZUR GENERATIVEN FERTIGUNG VON EINEM DREIDIMENSIONALEN OBJEKT
PROCÉDÉ DE FABRICATION ADDITIVE D'UN OBJET TRIDIMENSIONNEL

(43) Date of publication of application: 31.07.2019
(73) Proprietor: CL Schutzrechtsverwaltungs GmbH, 96215 Lichtenfels (DE)
(72) Inventor: Döhler, Tim, 96269 Großheirath (DE)
(74) Representative: Hafner & Kohl PartmbB

(56) References cited:
- EP-A1- 2 586 548
- EP-A1- 3 025 809
- WO-A1-2017/099478
- US-A1- 2015 273 631

## Description

The invention relates to a method for additively manufacturing at least one three-dimensional object by means of successive layerwise selective irradiation and consolidation of layers of build material which can be consolidated by means of at least one energy beam.

Respective methods are known from the field of additive manufacturing and comprise the characteristic successive layerwise selective irradiation and consolidation of layers of build material which can be consolidated by means of an energy beam. Well-known examples of respective methods are selective electron beam melting methods and selective laser melting methods.

WO2017099478 A1 relates to a method for stereoscopically molding a metal material using 3D printing. It provides a method for stereoscopically molding a metal material using 3D printing, the method comprising the steps of: (i) setting a process parameter of 3D printing; (ii) supplying metal powder; (iii) selectively emitting a molding light source used for 3D printing, thereby melting the metal powder; (iv) cooling and solidifying the melted metal powder, thereby forming a single layer of the metal material; and (v) laminating by repeating steps (ii) to (iv) until a stereoscopically molded object of the metal material is completed, wherein the microstructure inside the layer in step (iv) is controlled by the process parameter set in step (i), thereby adjusting the mechanical property of the metal material.

US2015273631 A1 discloses a method that involves applying pulsed laser energy to first quantity of powder material on substrate, so as to fuse particles of powder material into layer on substrate. The additional layer is formed on layer by applying pulsed laser energy to second quantity of powder material, so as to fuse particles of powder material into additional layer. The pulsed laser energy is applied in controlled manner, such that solidification dynamics of first and second quantities of powder material are altered to promote micro-structural characteristic of object comprising additional layers.

During an additive build process for additively manufacturing a respective three-dimensional object, respective methods typically use a specific process parameter set comprising a plurality of specific process parameters, e.g. beam parameters of an energy beam used for irradiating and consolidating respective layers of build material. In other words, typically only one single process parameter set is used during an additive build process for additively manufacturing a respective three-dimensional object.

In view of the steadily growing requirements on additively manufactured three-dimensional objects having not only arbitrarily customizable or customized geometrical, but also arbitrarily customizable or customized structural properties, i.e. particularly mechanical properties, there exists an ongoing need for developing methods allowing for additively manufacturing three-dimensional objects with customizable or customized structural properties, i.e. particularly mechanical properties. In this context, it would be particularly desirable to individually customize the structural properties for each single layer of build material which is to be selectively irradiated and thereby, consolidated during the additive build process.

It is thus, the object of the invention to provide a method for additively manufacturing three-dimensional objects allowing for additively manufacturing three-dimensional objects with customizable or customized structural properties, i.e. particularly mechanical properties.

This object is achieved by a method for additively manufacturing at least one three-dimensional object according to Claim 1. The claims depending on Claim 1 relate to possible embodiments of the method according to Claim 1.

The method specified herein is a method for additively manufacturing three-dimensional objects. The method thus, serves for additively manufacturing three-dimensional objects, e.g. technical components. The method generally comprises a successive layerwise selective irradiation(s) and resulting consolidation(s) of layers of at least one build material which can be consolidated by means of at least one energy beam. The build material used in context with the method can be a powder of any of a ceramic material, metal material, or polymer material, for instance. The energy beam used in context with the method can be an electron beam or a laser beam, for instance. The method can thus, be implemented as a selective electron beam melting method or as a selective laser melting method, for instance. Yet, it is also conceivable that the method is implemented as a binder jetting method, particularly a metal binder jetting method, for instance.

The method comprises the general steps of providing a plurality of process parameter sets and using at least two different process parameter sets of the plurality of process parameter sets for additively manufacturing the respective at least one three-dimensional object which is to be additively manufactured via the method. A respective process parameter set may comprise at least one of the following groups of process parameters: beam parameters, e.g. beam power, beam focus size, beam focus position, beam velocity, (lateral) distance of adjacent irradiation path vectors, etc., and/or layer parameters, e.g. grain morphology (distribution), grain orientation (distribution), grain size (distribution) of the build material, thickness of a layer of build material applied in a build plane, etc. Examples of respective process parameters are thus, beam parameters, such as beam power, beam focus size, beam velocity, (lateral) distance of adjacent irradiation path vectors, e.g. scanning vectors, for instance, and/or layer parameters, such as grain morphology (distribution), grain orientation (distribution), grain size (distribution) of the build material, thickness of a layer of build material applied in a build plane, for instance.

Notably, each of the plurality of process parameter sets comprises a plurality of process parameters allowing for a selective consolidation of a respective layer of build material in the area of the respective layer of build material in which it is / was selectively irradiated by means of the at least one energy beam; as is characteristic for respective methods, the selective irradiation of each layer of build material is carried out on build data defining respective areas of respective layers of build material in which the build material is to be selectively irradiated and consolidated, the build data being related at least with the geometric properties of the three-dimensional object which is to be additively manufactured. Hence, each of the process parameter sets provided in the first step of the method will result in a selective consolidation of a respective layer of build material in the area of respective layer of build material in which it is selectively irradiated by means of the at least one energy beam when implemented in the additive build process.

Further notably, each process parameter set results in specific properties of the microstructure of a respective area of a respective layer of build material which was selectively irradiated and consolidated on basis of the respective process parameter set. Particularly, each process parameter set comprises a specific combination of a plurality of process parameters resulting in specific properties of the microstructure of an area of the respective layer of build material which was selectively irradiated and consolidated on basis of the respective process parameter set. Hence, each process parameter set is correlated with specific properties of the microstructure of a respective area of a respective layer of build material which was selectively irradiated and consolidated on basis of the respective process parameter set.

Each process parameter set can also be correlated with a specific energy input into the selectively irradiated area of the at least one layer of build material during irradiation, i.e. when being irradiated with the at least one energy beam. Each process parameter set can thus, be correlated with a specific energy input into the selectively irradiated area of the at least one layer of build material during irradiation, i.e. particularly when heating up from an initial lower temperature level, particularly a room temperature level or a pre-heated temperature level below the melting temperature of the build material, to a higher temperature level, particularly a temperature level in which the build material is in a melt phase, during irradiation. Thus, each process parameter set can also be correlated with a specific heating behavior of the selectively irradiated area of the at least one layer of build material when being irradiated with the at least one energy beam, particularly a specific melting behavior - which also includes diverse properties of the melt region, such as melt pool geometry, melt pool size, melt pool temperature, etc. - of the selectively irradiated area of the at least one layer of build material during irradiation, i.e. when being irradiated with the at least one energy beam.

As such, each process parameter set can (further) be correlated with a specific consolidation behavior of the selectively irradiated area of the at least one layer of build material, particularly a specific solidification behavior of the selectively irradiated area of the at least one layer of build material, when cooling from a higher temperature level, particularly a temperature level in which the build material is in a melt phase, during irradiation, i.e. when being irradiated with the at least one energy beam, to a lower temperature level during consolidation, i.e. when being consolidated. Since the consolidation behavior of the selectively irradiated area of the at least one layer of build material (essentially) influences the grain growth and thus, the grain structure of the build material in the selectively irradiated area of the at least one layer of build material - the grain structure of the build material being decisive for the microstructure and microstructural properties, respectively of the three-dimensional object -, each process parameter set can also be correlated with a specific grain growth and thus, grain structure of the selectively irradiated area of the at least one layer of build material.

Of course, the resulting microstructure and microstructural properties, respectively of the layers of build material can be affected by other parameters such as chemical and/or physical parameters of the layer of build material, e.g. density, temperature, humidity content, etc., the chemical and/or physical atmosphere within the process chamber in which the additive manufacturing process takes place, etc. Yet, for given parameters, e.g. for given chemical and/or physical parameters of the layers of build material, the chemical and/or physical atmosphere within the process chamber in which the additive manufacturing process takes place, etc., each process parameter set results in specific properties of the microstructure of the respective area of the respective layer of build material which was selectively irradiated and consolidated on basis of the respective process parameter set.

In a second step of the method, at least two different process parameter sets, i.e. two process parameter sets which differ from each other in at least one process parameter, of the plurality of process parameter sets are used for additively manufacturing the respective three-dimensional object by means of the successive layerwise selective irradiation and consolidation of layers of build material which can be consolidated by means of at least one energy beam. In such a manner, i.e. by using at least two different process parameter sets of the plurality of process parameter sets, whereby each of the at least two process parameter sets results in specific properties of the microstructure of the area of a respective layer of build material which was selectively irradiated and consolidated on basis of the respective process parameter set, different microstructures and microstructural properties can be concertedly realized. This allows for - since the structural properties, i.e. particularly mechanical properties, are essentially characterized by the microstructural properties - customizable or customized structural properties, i.e. particularly mechanical properties, of the three-dimensional object which is to be additively manufactured via the method.

Hence, a method for additively manufacturing three-dimensional objects allowing for additively manufacturing three-dimensional objects with customizable or customized structural properties, i.e. particularly mechanical properties, is given.

As mentioned above, each process parameter set can also result in or be correlated with a specific grain growth and thus, grain structure of the selectively irradiated area of the at least one layer of build material. In other words, each process parameter set can also result in or be correlated with a specific grain growth behavior, particularly in a specific preferred grain growth behavior, in the selectively irradiated area of the at least one layer of build material. Grain growth is particularly influenced by the energy input into the build material. Hence, by concertedly adjusting the energy input into the build material, grain growth can be concertedly adjusted in at least one specific direction. Hence, by using different process parameter sets, different (preferred) directions of grain growth can be realized which also allows for customizable or customized grain structures resulting in customizable or customized structural properties, i.e. particularly mechanical properties, of the three-dimensional object which is to be additively manufactured.

As an example, when increasing the energy input into a specific area of a layer of build material, preferred grain growth can be affected e.g. in the build direction of the three-dimensional object which is to be additively manufactured. Thus, at least one process parameter set of the plurality of process parameter sets may result in a (preferred) grain growth in build direction of the three-dimensional object which is to be additively manufactured. A respective grain growth may result in relatively long grains extending in build direction (z-direction), for instance. This process parameter set may comprise process parameters allowing for an increased energy input into a specific area of a layer of build material, particularly with reference to a nominal energy input into the specific area of a layer of build material. Respective process parameters allowing for a (preferred) grain growth in build direction of the three-dimensional object which is to be additively manufactured can comprise an increased beam power and/or decreased beam focus size (narrow(er) beam focus) and/or decreased beam velocity and/or increased (lateral) distance of adjacent irradiation path vectors, for instance. Other process parameters resulting in the same or a similar effect are conceivable.

As a further example, when decreasing the energy input into a specific area of a layer of build material, preferred grain growth can be affected in a direction transverse to the build direction of the three-dimensional object which is to be additively manufactured. Thus, at least one process parameter set of the plurality of process parameter sets may result in a (preferred) grain growth in a direction transverse to the build direction of the three-dimensional object which is to be additively manufactured. A respective grain growth may result in relatively wide grains extending in a direction transverse to the build direction (x- and/or y-direction), for instance. This process parameter set may comprise process parameters allowing for a decreased energy input into a specific area of a layer of build material, particularly with reference to a nominal energy input into the specific area of a layer of build material. Respective process parameters allowing for a (preferred) grain growth in direction transverse to the build direction of the three-dimensional object which is to be additively manufactured can comprise a decreased beam power and/or increased beam focus size (wide(r) beam focus) and/or increased beam velocity and/or decreased (lateral) distance of adjacent irradiation path vectors, for instance. Other process parameters resulting in the same or a similar effect are conceivable.

As a result of the option to concertedly influence the grain structure or respective grain parameters, particularly the grain growth, a (mechanically) teethed microstructure in which adjacently disposed grains are disposed in a teethed arrangement is generated by using the at least two different process parameter sets. Hence, using at least two different process parameter sets results in a (mechanically) teethed grain structure in which adjacently disposed grains are disposed in a teethed arrangement in which they at least partly (mechanically) engage with each other. A respective (mechanically) teethed grain structure is understood as a structure of grains differing from each other in grain parameters, such as grain boundaries, grain size, grain morphology, grain orientation, etc., which grains at least partly (mechanically) engage with each other and are thus, mechanically interlocked with each other due to their different grain parameters. A respective (mechanically) teethed grain structure can significantly improve the mechanical properties of the three-dimensional object which is to be additively manufactured via the method.

As a further result of the option to concertedly influence the grain structure or grain parameters, particularly the grain growth, a microstructure having no microstructural glide planes for microstructural cracks or at least less microstructural glide planes for microstructural cracks compared with using only one process parameter set can be generated by using the at least two different process parameter sets. Hence, using at least two different process parameter sets can result in a microstructure having no microstructural glide planes for microstructural cracks or at least less microstructural glide planes for microstructural cracks compared with using only one process parameter set. By avoiding respective microstructural glide planes or at least reducing the number of respective microstructural glide planes crack formation and crack propagation can be avoided or at least reduced which can (also) significantly improve the mechanical properties of the three-dimensional object which is to be additively manufactured via the method.

According to an exemplary embodiment of the method, the method may further comprise the steps of: providing at least one target criterion for at least one layer of build material which is to be successively selectively irradiated and consolidated by means of the at least one energy beam; choosing at least one process parameter set of the plurality of process parameter sets on basis of the at least one target criterion; and using the at least one chosen process parameter set for the selective irradiation and consolidation of the at least one layer of build material which can be consolidated by means of the at least one energy beam. Hence, by providing respective target criteria, specific target properties of the three-dimensional object which is to be additively manufactured via the method can be defined and implemented by at least one process parameter set which was chosen on basis of the target criterion. Choosing of at least one suitable process parameter set on basis of a given target criterion may be implemented by a hard- and/or software-embodied look-up device correlating specific target criteria with process parameter sets suitable for achieving the respective target criteria. A respective look-up device may comprise experimental data showing diverse correlations, dependencies, etc. between process parameter sets and resulting structural properties of three-dimensional objects additively manufactured on basis of respective process parameter sets.

A respective target criterion may be or comprise an energy input criterion, a consolidation criterion, a microstructure criterion, or a grain structure criterion, for instance. A respective energy input criterion may refer to an amount of energy which is input into the selectively irradiated area of at least one layer of build material during irradiation. A respective consolidation criterion may refer to the consolidation behavior of the selectively irradiated area of at least one layer of build material, when cooling from a higher temperature level, particularly a temperature level in which the build material is in a melt phase, during irradiation, to a lower temperature level during consolidation. A respective microstructure criterion may refer to the microstructure and microstructural properties, respectively of the selectively irradiated and consolidated area of at least one layer of build material. A respective grain structure criterion may refer to grain parameters, such as grain boundaries, grain size, grain morphology, grain orientation, etc. of the selectively irradiated and consolidated area of at least one layer of build material.

As is apparent from the above, a respective target criterion may generally refer to the structural properties of the three-dimensional object which is to be additively manufactured via the method, particularly the mechanical properties of the three-dimensional object which is to be additively manufactured via the method. In particular, a respective target criterion may even refer to the structural or mechanical properties at least of the respective layer of build material for which the at least one process parameter set is chosen. Both aspects contribute to the possibility of additively manufacturing three-dimensional objects with customizable or customized structural properties, i.e. particularly mechanical properties.

According to the method, different process parameter sets can be used for selectively irradiating and consolidating at least one specific layer of build material. Hence, a plurality of different process parameter sets can be used for irradiating and consolidating one (single) specific layer of build material. In other words, different process parameter sets can be applied within one (single) specific layer of build material. Hence, a respective layer of build material may comprise a first sub-area which is irradiated and consolidated on basis of a first process parameter set and at least one further sub-area which is irradiated and consolidated on basis of at least one further process parameter set.

Of course, it additionally or alternatively possible that different process parameter sets are used for selectively consolidating different layers of build material. In other words, different process parameter sets can be applied in different layers of build material, particularly in (directly) adjacent layers of build material. Hence, a first layer of build material can be irradiated and consolidated on basis of at least one first process parameter set and at least one further layer of build material can be irradiated and consolidated on basis of at least one further process parameter set.

In either case, different process parameter sets can be used for one or a plurality of irradiation path vectors, e.g. scanning vectors, used for selectively irradiating and consolidating at least one specific layer of build material. Hence, each irradiation path vector may comprise a specific process parameter set and thus, specific process parameters.

The invention further relates to an apparatus for additively manufacturing three-dimensional objects, e.g. technical components, by means of successive layerwise selective irradiation and consolidation of layers of build material which can be consolidated by means of at least one energy beam according to claim 11. The apparatus may be implemented as a selective electron beam melting apparatus or a selective laser melting apparatus, for instance. Yet, the apparatus may also be implemented as a binder jetting apparatus, particularly a metal binder jetting apparatus. The apparatus comprises a number of functional and/or structural units which are operable during its operation. A first exemplary functional and/or structural unit is a build material application unit adapted to apply a layer of build material in a build plane of the apparatus. Another exemplary functional and/or structural unit is an irradiation unit adapted to successively selectively irradiate and consolidate respective layers of build material applied in the build plane with at least one energy beam, e.g. an electron beam or a laser beam. Notably, the apparatus comprises a data provision unit - which can be a further example of a respective functional and/or structural unit of the apparatus - providing a plurality of process parameter sets each comprising a plurality of process parameters allowing for a selective consolidation of a layer of build material; and a control unit - which can be a further example of a respective functional and/or structural unit of the apparatus - for controlling operation of the apparatus such that at least two different process parameter sets of the plurality of process parameter sets provided by the comprising are used for additively manufacturing at least one three-dimensional object by means by means of the successive layerwise selective irradiation and consolidation of layers of build material which can be consolidated by means of at least one energy beam. The data provision unit may be internal or external to the apparatus. An internal data provision unit may be a structural component of the apparatus. An external data provision unit may be no structural component of the apparatus. An external data provision unit may be a structural component of a, particularly mobile or portable, user terminal, such as computer, smartphone, tablet, etc., which can be assigned to the control unit of the apparatus. In either case, the data provision unit comprises at least one hard- and/or software embodied communication interface for communicating with the control unit of the apparatus so as to provide respective process parameter sets to the control unit of the apparatus. The control unit is adapted to operate the apparatus on basis of respective process parameter sets so as to perform the method specified herein. As such, the control unit is particularly adapted to arrange for using at least two different process parameter sets of the plurality of process parameter sets for additively manufacturing at least one three-dimensional object by means by means of the successive layerwise selective irradiation and consolidation of layers of build material which can be consolidated by means of at least one energy beam. All annotations relating to the method also apply to the apparatus and vice versa.

The disclosure further relates to a respective data provision unit for an apparatus as specified herein. The data provision unit may comprise a global or local data storage device. All annotations relating to the method and apparatus also apply to the data provision unit and vice versa.

Exemplary embodiments of the invention are described with reference to the Fig., whereby:
- Fig. 1: shows a principle drawing of an apparatus for additively manufacturing of threedimensional objects according to an exemplary embodiment;
- Fig. 2, 3: each show a principle drawing of the detail A of Fig. 1; and
- Fig. 4, 5: each show a principle drawing of a corresponding microstructure related with Fig. 2, 3; and
- Fig. 6: shows a principle drawing of a corresponding microstructure according to prior art.

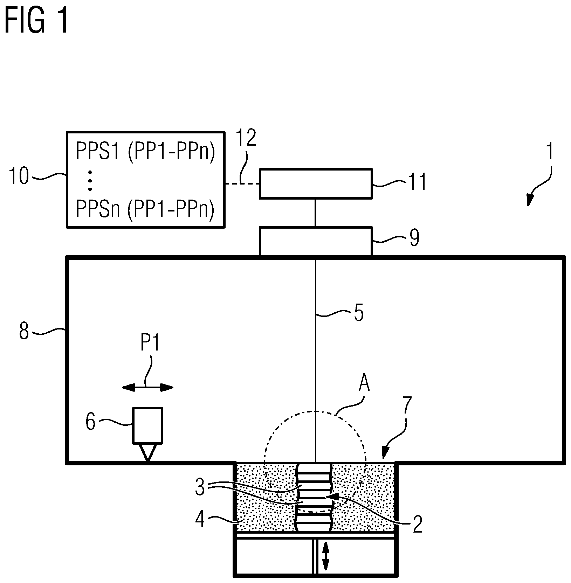

Fig. 1 shows a principle drawing of an apparatus 1 for additively manufacturing of three-dimensional objects 2 according to an exemplary embodiment. The apparatus 1 is adapted to additively manufacturing three-dimensional objects 2, e.g. technical components, by means of successive layerwise selective irradiation and consolidation of layers 3 of build material 4 which can be consolidated by means of at least one energy beam 5. The energy beam 5 may be an electron beam or a laser beam, for instance. The apparatus 1 may thus, be embodied as a selective electron beam melting apparatus or as a selective laser melting apparatus, for instance.

The apparatus 1 comprises a number of functional and/or structural units which are operable during its operation. A first exemplary functional and/or structural unit is a build material application unit 6, e.g. a re-coating unit, adapted to apply layers 3 of build material 4 in a build plane 7 of a process chamber 8 the apparatus 1. The build material application unit 6 can be moveably supported relative to the build plane 7 as indicated by double-arrow P1. Another exemplary functional and/or structural unit is an irradiation unit 9 adapted to successively selectively irradiate and consolidate respective layers 3 of build material 4 applied in the build plane of the process chamber 8 with at least one energy beam 5. Another exemplary functional and/or structural unit is a hard- and/or software embodied control unit 11 for controlling operation of the apparatus 1.

The apparatus 1 further comprises a data provision unit 10 - which can be a further example of a respective functional and/or structural unit of the apparatus 1. The data provision unit 10 may be internal or external to the apparatus 1. An internal data provision unit 10 may be a structural component of the apparatus 1. An external data provision unit may be no structural component of the apparatus 1. An external data provision unit may be a structural component of a, particularly mobile or portable, user terminal, such as computer, smartphone, tablet, etc., which can be assigned to the control unit of the apparatus.

The data provision unit 10 provides a plurality of process parameter sets PPS1 - PPSn each comprising a plurality of process parameters PP1 - PPn allowing for a selective consolidation of respective layers 3 of build material 4. A respective process parameter set PPS1 - PPSn may comprise at least one of the following groups of process parameters PP1 - PPn: beam parameters, e.g. beam power, beam focus size, beam focus position, beam velocity, (lateral) distance of adjacent irradiation path vectors V1 - V4, etc., and/or layer parameters, e.g. grain morphology (distribution), grain orientation (distribution), grain size (distribution) of the build material 4, thickness of a layer 3 of build material 4 applied in a build plane 7, etc. Examples of respective process parameters PP1 - PPn are thus, beam parameters, such as beam power, beam focus size, beam velocity, (lateral) distance of adjacent irradiation path vectors V1 - V4, e.g. scanning vectors, for instance, and/or layer parameters, such as grain morphology (distribution), grain orientation (distribution), grain size (distribution) of the build material 4, thickness of a layer 3 of build material 4 applied in a build plane 7, for instance.

Notably, each of the plurality of process parameter sets PPS1 - PPSn comprises a plurality of process parameters PP1 - PPn allowing for a selective consolidation of a respective layer 3 of build material 4 in the area of the respective layer 3 of build material 4 in which it is/was selectively irradiated by means of one energy beam 5.

Further notably, each process parameter set PPS1 - PPSn results in specific properties of the microstructure of a respective area of a respective layer 3 of build material 4 which was selectively irradiated and consolidated on basis of the respective process parameter set PPS1 - PPSn. Particularly, each process parameter set PPS1 - PPSn comprises a specific combination of a plurality of process parameters PP1 - PPn resulting in specific properties of the microstructure of an area of the respective layer 3 of build material 4 which is to be selectively irradiated and consolidated on basis of the respective process parameter set PPS1 - PPSn. Hence, each process parameter set PPS1 - PPSn is correlated with specific properties of the microstructure of a respective area of a respective layer 3 of build material 4 which was selectively irradiated and consolidated on basis of the respective process parameter set PPS1 - PPSn.

The data provision unit 10 comprises at least one hard- and/or software embodied communication interface 12 for communicating with the control unit 11 of the apparatus 1 so as to provide respective process parameter sets PPS1 - PPSn to the control unit 11 of the apparatus 1.

The control unit 11 is adapted to operate the apparatus 1 such that at least two different process parameter sets PPS1 - PPSn of the plurality of process parameter sets PPS1-PPSn provided by the data provision unit 10 are used for additively manufacturing at least one three-dimensional object 2 by means by means of the successive layerwise selective irradiation and consolidation of layers 3 of build material 4 which can be consolidated by means of at least one energy beam 5. In this context, the control unit 11 and thus, the apparatus 1 is adapted to perform a method which will be specified in the following in more detail:
The method specified is a method for additively manufacturing three-dimensional objects 2 and comprises a successive layerwise selective irradiation(s) and resulting consolidation(s) of layers 3 of build material which can be consolidated by means of the energy beam 5. The method can be implemented as a selective electron beam melting method or as a selective laser melting method, for instance.

The method comprises the general steps of providing a plurality of respective process parameter sets PPS1 - PPSn and using at least two different process parameter sets PPS1 - PPSn of the plurality of process parameter sets PPS1 - PPSn for additively manufacturing the respective three-dimensional object 2 which is to be additively manufactured via the method. In such a manner, i.e. by using at least two different process parameter sets PPS1-PPSn of the plurality of process parameter sets PPS1 - PPSn, whereby each of the at least two process parameter sets results in specific properties of the microstructure of the area of a respective layer 3 of build material 4 which was selectively irradiated and consolidated on basis of the respective process parameter set PPS1 - PPSn, different microstructures and microstructural properties can be concertedly realized. This allows for - since the structural properties, i.e. particularly mechanical properties, are essentially characterized by the microstructural properties - customizable or customized structural properties, i.e. particularly mechanical properties, of the three-dimensional object 2 which is to be additively manufactured via the method.

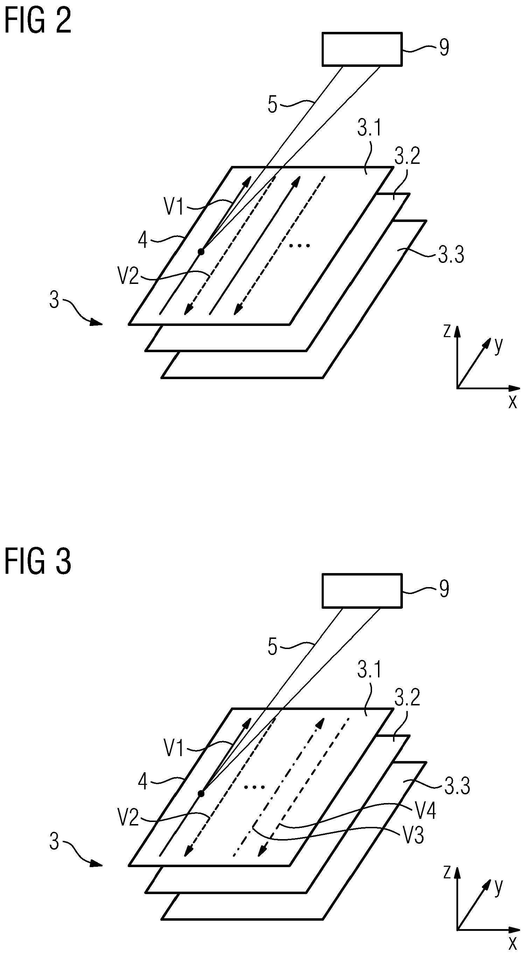

The method is apparent from Fig. 2, 3 each showing a principle drawing of the detail A of Fig. 1 in an exploded perspective view of an exemplary number of three vertically directly adjacent layers 3.1 - 3.3 of build material 4 of a given layer thickness of e.g. 50 µm.

According to the exemplary embodiment of Fig. 2, the irradiation path vectors V1 are related with a first process parameter set PPS1 and the irradiation path vectors V2 are related with a second process parameter set PPS2. The first process parameter set PPS1 can comprise the following exemplary process parameters: beam power: 200 W, beam focus size: 100 µm, beam velocity: 1000 mm/s, (lateral) distance of irradiation path vectors V1, V2: 0,1 mm. The second process parameter set PPS2 can comprise the following exemplary process parameters: beam power: 300 W, beam focus size: 140 µm, beam velocity: 1500 mm/s, (lateral) distance of irradiation path vectors V1, V2: 0,12 mm. Hence, the process parameter sets PPS1, PPS2 differ in a plurality of process parameters.

According to the exemplary embodiment of Fig. 3, the irradiation path vector V1 is related with a first process parameter set PPS1, the irradiation path vector V2 is related with a second process parameter set PPS2, the irradiation path vector V3 is related with a third process parameter set PPS3, and the irradiation path vector V4 is related with a fourth process parameter set PPS4. The first process parameter set PPS1 can comprise the following exemplary process parameters: beam power: 200 W, beam focus size: 100 µm, beam velocity: 1000 mm/s, (lateral) distance of irradiation path vectors V1, V2: 0,1 mm. The second process parameter set PPS2 can comprise the following exemplary process parameters: beam power: 300 W, beam focus size: 140 µm, beam velocity: 1500 mm/s, (lateral) distance of irradiation path vectors V1, V2: 0,12 mm. The third process parameter set PPS3 can comprise the following exemplary process parameters: beam power: 100 W, beam focus size: 70 µm, beam velocity: 500 mm/s, (lateral) distance of irradiation path vectors V1, V2: 0,08 mm. The fourth process parameter set PPS4 can comprise the following exemplary process parameters: beam power: 100 W, beam focus size: 150 µm, beam velocity: 2200 mm/s, (lateral) distance of irradiation path vectors V1, V2: 0,15 mm. Hence, the process parameter sets PPS1 - PPS4 differ in a plurality of process parameters.

As is apparent from the differences in the respective process parameters, each process parameter set PPS1 - PPSn can also be correlated with a specific energy input into the selectively irradiated area of the layer 3 of build material 4 during irradiation, i.e. when being irradiated with the energy beam 5. Each process parameter set PPS1 - PPSn can thus, be correlated with a specific energy input into the selectively irradiated area of the layer 3 of build material 4 during irradiation, i.e. particularly when heating up from an initial lower temperature level, particularly a room temperature level or a pre-heated temperature level below the melting temperature of the build material 4, to a higher temperature level, particularly a temperature level in which the build material 4 is in a melt phase, during irradiation. Thus, each process parameter set PPS1 - PPSn can also be correlated with a specific heating behavior of the selectively irradiated area of the layer 3 of build material 4 when being irradiated with the energy beam 5, particularly a specific melting behavior - which also includes diverse properties of the melt region, such as melt pool geometry, melt pool size, melt pool temperature, etc. - of the selectively irradiated area of the layer 3 of build material 4 during irradiation, i.e. when being irradiated with the energy beam 5.

As such, each process parameter set PPS1 - PPSn can further be correlated with a specific consolidation behavior of the selectively irradiated area of the layer 3 of build material 4, particularly a specific solidification behavior of the selectively irradiated area of the layer 3 of build material 4, when cooling from a higher temperature level, particularly a temperature level in which the build material 4 is in a melt phase, during irradiation, i.e. when being irradiated with the energy beam 5, to a lower temperature level during consolidation, i.e. when being consolidated. Since the consolidation behavior of the selectively irradiated area of the layer 3 of build material 4 (essentially) influences the grain growth and thus, the grain structure of the build material 4 in the selectively irradiated area of the layer 3 of build material 4 - the grain structure of the build material 4 being decisive for the microstructure and microstructural properties, respectively of the three-dimensional object 2 -, each process parameter set PPS1 - PPSn can also be correlated with a specific grain growth and thus, grain structure of the selectively irradiated area of the layer 3 of build material 4.

Of course, the resulting microstructure and microstructural properties, respectively of the layers 3 of build material 4 can be affected by other parameters such as chemical and/or physical parameters of the layer of build material 4, e.g. density, temperature, humidity content, etc., the chemical and/or physical atmosphere within the process chamber 8 in which the additive manufacturing process takes place, etc. Yet, for given parameters, e.g. for given chemical and/or physical parameters of the layers of build material 4, the chemical and/or physical atmosphere within the process chamber 8 in which the additive manufacturing process takes place, etc., each process parameter set PPS1 - PPSn results in specific properties of the microstructure of the respective area of the respective layer 3 of build material 4 which was selectively irradiated and consolidated on basis of the respective process parameter set PPS1 - PPSn.

As mentioned above, each process parameter set PPS1 - PPSn can result in or be correlated with a specific grain growth behavior, particularly in a specific preferred grain growth behavior, in the selectively irradiated area of the layer 3 of build material 4. Grain growth is particularly influenced by the energy input into the build material 4. Hence, by concertedly adjusting the energy input into the build material 4, grain growth can be concertedly adjusted in at least one specific direction. Hence, by using different process parameter sets PPS1 - PPSn, different (preferred) directions of grain growth can be realized which also allows for customizable or customized grain structures resulting in customizable or customized structural properties, i.e. particularly mechanical properties, of the three-dimensional object 2 which is to be additively manufactured.

As an example, when increasing the energy input into a specific area of a layer 3 of build material 4, preferred grain growth can be affected e.g. in the build direction of the three-dimensional object 2 which is to be additively manufactured. Thus, at least one process parameter set PPS1 - PPSn of the plurality of process parameter sets PPS1 - PPSn may result in a (preferred) grain growth in build direction (z-direction) of the three-dimensional object 2. A respective grain growth may result in relatively long grains extending in build direction. This process parameter set may comprise process parameters allowing for an increased energy input into a specific area of a layer 3 of build material 4, particularly with reference to a nominal energy input into the specific area of a layer 3 of build material 4. Respective process parameters allowing for a (preferred) grain growth in build direction of the three-dimensional object 2 which is to be additively manufactured can comprise an increased beam power and/or decreased beam focus size (narrow(er) beam focus) and/or decreased beam velocity and/or increased (lateral) distance of adjacent irradiation path vectors, for instance.

As a further example, when decreasing the energy input into a specific area of a layer 3 of build material 4, preferred grain growth can be affected in a direction (x- and/or y-direction) transverse to the build direction of the three-dimensional object 2 which is to be additively manufactured. Thus, at least one process parameter set PPS1 - PPSn of the plurality of process parameter sets PPS1 - PPSn may result in a (preferred) grain growth in a direction transverse to the build direction of the three-dimensional object 2 which is to be additively manufactured. A respective grain growth may result in relatively wide grains extending in a direction transverse to the build direction. This process parameter set may comprise process parameters allowing for a decreased energy input into a specific area of a layer 3 of build material 4, particularly with reference to a nominal energy input into the specific area of a layer 3 of build material 4. Respective process parameters allowing for a (preferred) grain growth in a direction transverse to the build direction of the three-dimensional object 2 which is to be additively manufactured can comprise a decreased beam power and/or increased beam focus size (wide(r) beam focus) and/or increased beam velocity and/or decreased (lateral) distance of adjacent irradiation path vectors, for instance.

As a result of the option to concertedly influence the grain structure or respective grain parameters, particularly the grain growth, a (mechanically) teethed microstructure in which adjacently disposed grains are disposed in a teethed arrangement can be generated by using the at least two different process parameter sets PPS1 - PPSn. Hence, using at least two different process parameter sets PPS1 - PPSn may result in a (mechanically) teethed grain structure in which adjacently disposed grains 13 are disposed in a teethed arrangement in which they may at least partly (mechanically) engage with each other. A respective (mechanically) teethed grain structure may be understood as a structure of grains differing from each other in grain parameters, such as grain boundaries, grain size, grain morphology, grain orientation, etc., which grains at least partly (mechanically) engage with each other and are thus, mechanically interlocked with each other due to their different grain parameters. A respective (mechanically) teethed grain structure can significantly improve the mechanical properties of the three-dimensional object 2 which is to be additively manufactured via the method.

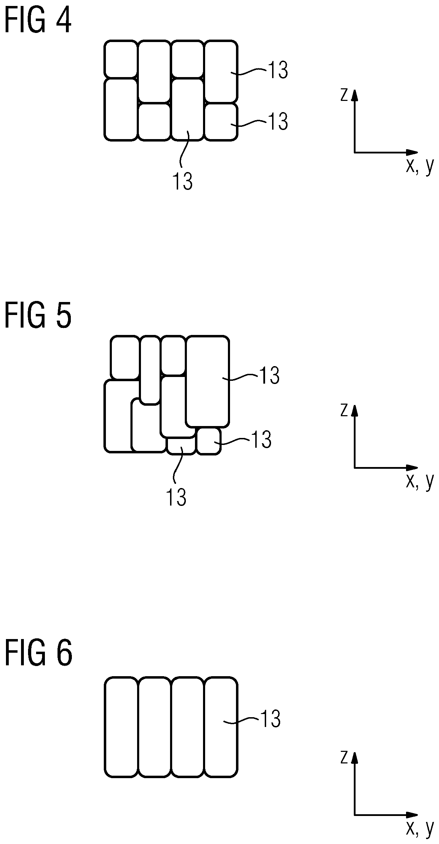

A respective (mechanically) teethed grain structure is apparent from Fig, 4, 5 each showing a principle drawing of a corresponding microstructure related with Fig. 2, 3, whereby the principle drawing of the microstructure related with Fig. 2 is shown in Fig. 4 and the principle drawing of the microstructure related with Fig. 3 is shown in Fig. 5. In Fig. 4, 5, the grain structures are indicated as vertical columns.

As a further result of the option to concertedly influence the grain structure or grain parameters, particularly the grain growth, and as is also apparent from Fig. 4, 5, a microstructure having no microstructural glide planes for microstructural cracks or at least less microstructural glide planes for microstructural cracks compared with using only one process parameter set can be generated by using different process parameter sets PPS1-PPSn. Hence, using different process parameter sets PPS1 - PPSn can result in a microstructure having no microstructural glide planes for microstructural cracks or at least less microstructural glide planes for microstructural cracks compared with using only one process parameter set. As is discernible from Fig. 4, 5, by avoiding respective microstructural glide planes or at least reducing the number of respective microstructural glide planes crack formation and crack propagation can be avoided or at least reduced which can also significantly improve the mechanical properties of the three-dimensional object 2 which is to be additively manufactured via the method.

For the purpose of comparison, Fig. 6 shows a principle drawing of a corresponding microstructure according to prior art, i.e. when only one single process parameter set is used. As is apparent from Fig. 6, the grains 13 all have the same shape and are uniformly arranged. The grain structure of Fig. 6 thus, offers microstructural glide planes for microstructural crack propagation.

The method may further comprise the steps of: providing at least one target criterion for at least one layer 3 of build material 4 which is to be successively selectively irradiated and consolidated by means of the energy beam 5; choosing at least one process parameter set PPS1 - PPSn of the plurality of process parameter sets PPS1 - PPSn on basis of the target criterion; and using the chosen process parameter set PPS1 - PPSn for the selective irradiation and consolidation of the at least one layer 3 of build material 4 which can be consolidated by means of the energy beam 5. Hence, by providing respective target criteria, specific target properties of the three-dimensional object 2 which is to be additively manufactured via the method can be defined and implemented by at least one process parameter set PPS1 - PPSn which was chosen on basis of the target criterion. Choosing of at least one suitable process parameter set PPS1 - PPSn on basis of a given target criterion may be implemented by a hard- and/or software-embodied look-up device (not shown) correlating specific target criteria with process parameter sets PPS1 - PPSn suitable for achieving the respective target criteria. A respective look-up device may comprise experimental data showing diverse correlations, dependencies, etc. between process parameter sets PPS1 - PPSn and resulting structural properties of three-dimensional objects 2 additively manufactured on basis of respective process parameter sets PPS1 - PPSn.

A respective target criterion may be or comprise an energy input criterion, a consolidation criterion, a microstructure criterion, or a grain structure criterion, for instance. A respective energy input criterion may refer to an amount of energy which is input into the selectively irradiated area of at least one layer 3 of build material 4 during irradiation. A respective consolidation criterion may refer to the consolidation behavior of the selectively irradiated area of at least one layer 3 of build material 4, when cooling from a higher temperature level, particularly a temperature level in which the build material 4 is in a melt phase, during irradiation, to a lower temperature level during consolidation. A respective microstructure criterion may refer to the microstructure and microstructural properties, respectively of the selectively irradiated and consolidated area of at least one layer 3 of build material 4. A respective grain structure criterion may refer to grain parameters, such as grain boundaries, grain size, grain morphology, grain orientation, etc. of the selectively irradiated and consolidated area of at least one layer 3 of build material 4.

In other words, a respective target criterion may generally refer to the structural properties of the three-dimensional object 2 which is to be additively manufactured via the method, particularly the mechanical properties of the three-dimensional object 2 which is to be additively manufactured via the method. A respective target criterion may even refer to the structural or mechanical properties at least of the respective layer 3 of build material 4 for which the at least one process parameter set PPS1 - PPSn is chosen. Both aspects contribute to the possibility of additively manufacturing three-dimensional objects 2 with customizable or customized structural properties, i.e. particularly mechanical properties.

According to the method, different process parameter sets PPS1 - PPSn can be used for selectively irradiating and consolidating at least one specific layer of build material (see Fig. 2, 3). Hence, a plurality of different process parameter sets PPS1 - PPSn can be used for irradiating and consolidating one (single) specific layer of build material 4. Hence, a respective layer of build material may comprise a first sub-area which is irradiated and consolidated on basis of a first process parameter set and at least one further sub-area which is irradiated and consolidated on basis of at least one further process parameter set (see Fig. 2, 3).

Of course, it additionally or alternatively possible that different process parameter sets PPS1 - PPSn are used for selectively consolidating different layers 3 of build material 4. Hence, a first layer 3 of build material 4 can be irradiated and consolidated on basis of at least one first process parameter set PPS1 and at least one further layer of build material layer can be irradiated and consolidated on basis of at least one further process parameter set PPSn.

As indicated above, different process parameter sets PPS1 - PPSn can be used for one or a plurality of irradiation path vectors V1 - V4, e.g. scanning vectors, used for selectively irradiating and consolidating at least one specific layer 3 of build material 4. Hence, each irradiation path vector V1 - V4 may comprise a specific process parameter set PPS1 - PPSn and thus, specific process parameters PP1 - PPn.

## Claims

1. Method for additively manufacturing at least one three-dimensional object (2) by means of successive layerwise selective irradiation and consolidation of layers (3) of build material (4) which can be consolidated by means of at least one energy beam (5), comprising the steps of:
- providing a plurality of process parameter sets (PPS1 - PPSn) each comprising a plurality of process parameters (PP1 - PPn) allowing for a selective consolidation of a layer (3) of build material (4), whereby each process parameter set (PPS1 - PPSn) results in specific properties of the microstructure of an area of the respective layer (3) of build material (4) which was selectively irradiated and consolidated on basis of the respective process parameter set (PPS1 - PPSn);
- using at least two different process parameter sets (PPS1 - PPSn) of the plurality of process parameter sets (PPS1 - PPSn) for additively manufacturing at least one three-dimensional object (2) by means of the successive layerwise selective irradiation and consolidation of layers (3) of build material (4) which can be consolidated by means of at least one energy beam (5); **wherein** an interlocking microstructure in which adjacently disposed grains (13) are disposed in an interlocking arrangement is generated by using the at least two different process parameter sets (PPS1 - PPSn).

2. Method according to Claim 1, **wherein** at least one process parameter set (PPS1-PPSn) of the plurality of process parameter sets (PPS1 - PPSn) results in a grain growth in build direction of the three-dimensional object (2) which is to be additively manufactured.

3. Method according to Claim 1 or 2, **wherein** at least one process parameter set (PPS1 - PPSn) of the plurality of process parameter sets (PPS1 - PPSn) results in a grain growth in a direction transverse to the build direction of the three-dimensional object (2) which is to be additively manufactured.

4. Method according to any of the preceding Claims, **wherein** a microstructure having no microstructural glide planes for microstructural cracks or at least less microstructural glide planes for microstructural cracks compared with using only one process parameter set is generated by using the at least two different process parameter sets (PPS1 - PPSn).

5. Method according to any of the preceding Claims, **further comprising** the steps of:
- providing at least one target criterion for at least one layer (3) of build material (4) which is to be successively selectively irradiated and consolidated by means of the at least one energy beam (5);
- choosing at least one process parameter set (PPS1 - PPSn) of the plurality of process parameter sets (PPS1 - PPSn) on basis of the at least one target criterion;
- using the at least one chosen process parameter set (PPS1 - PPSn) for the selective irradiation and consolidation of at least one layer (3) of build material (4) which can be consolidated by means of at least one energy beam (5).

6. Method according to Claim 5, **wherein** the target criterion is or refers to at least one of an energy input criterion, a consolidation criterion, a microstructure criterion, or a grain structure criterion.

7. Method according to any of the preceding Claim, **wherein** different process parameter sets (PPS1 - PPSn) are used for selectively consolidating at least one specific layer (3) of build material (4).

8. Method according to any of the preceding Claim, **wherein** different process parameter sets (PPS1 - PPSn) are used for selectively consolidating different layers (3) of build material (4).

9. Method according to any of the preceding Claims, **wherein** different process parameter sets (PPS1 - PPSn) are used for one or a plurality of irradiation path vectors (V1 - V4) used for selectively irradiating and consolidating at least one specific layer (3) of build material (4).

10. Method according to any of the preceding Claims, **wherein** a process parameter set (PPS1 - PPSn) comprises at least one of the following groups of process parameters (PPS - PPn) beam parameters and layer parameters.

11. Apparatus (1) for additively manufacturing at least one three-dimensional object (2) by means of successive layerwise selective irradiation and consolidation of layers (3) of build material (4) which can be consolidated by means of at least one energy beam (5), the apparatus (1) comprising:
- a data provision unit (10) providing a plurality of process parameter sets (PPS1-PPSn) each comprising a plurality of process parameters (PP1 - PPn) allowing for a selective consolidation of a layer (3) of build material (4), whereby each process parameter set (PPS1 - PPSn) results in specific properties of the microstructure of an area of the respective layer (3) of build material (4) which was selectively irradiated and consolidated on basis of the respective process parameter set (PPS1 - PPSn); and
- a control unit (11) for controlling operation of the apparatus (1) such that at least two different process parameter sets (PPS1 - PPSn) of the plurality of process parameter sets (PPS1 - PPSn) are used for additively manufacturing at least one three-dimensional object (2) by means by means of the successive layerwise selective irradiation and consolidation of layers of build material (4) which can be consolidated by means of at least one energy beam (5); **wherein**
the control unit (11) is configured to generate an interlocking microstructure in which adjacently disposed grains (13) are disposed in an interlocking arrangement by using the at least two different process parameter sets (PPS1 - PPSn).

## Patentansprüche

1. Verfahren zur additiven Herstellung mindestens eines dreidimensionalen Objekts (2) mittels aufeinanderfolgender schichtweiser selektiver Bestrahlung und Verfestigung von Schichten (3) aus Aufbaumaterial (4), die mittels mindestens eines Energiestrahls (5) verfestigt werden können, mit den Schritten:
- Bereitstellen einer Vielzahl von Prozessparametersätzen (PPS1 - PPSn), die jeweils eine Vielzahl von Prozessparametern (PP1 - PPn) umfassen, die eine selektive Verfestigung einer Schicht (3) aus Aufbaumaterial (4) ermöglichen, wobei jeder Prozessparametersatz (PPS1 - PPSn) zu spezifischen Eigenschaften der Mikrostruktur eines Bereiches der jeweiligen Schicht (3) aus Aufbaumaterial (4) führt, der auf Basis des jeweiligen Prozessparametersatzes (PPS1 - PPSn) selektiv bestrahlt und verfestigt wurde;
- Verwendung von mindestens zwei unterschiedlichen Prozessparametersätzen (PPS1 - PPSn) aus der Vielzahl der Prozessparametersätze (PPS1 - PPSn) zur additiven Herstellung mindestens eines dreidimensionalen Objekts (2) durch die aufeinanderfolgende schichtweise selektive Bestrahlung und Verfestigung von Schichten (3) aus Aufbaumaterial (4), die mittels mindestens eines Energiestrahls (5) verfestigt werden können; wobei unter Verwendung der mindestens zwei unterschiedlichen Prozessparametersätze (PPS1 - PPSn) ein ineinandergreifendes Gefüge erzeugt wird, bei dem nebeneinander angeordnete Körner (13) in einer ineinandergreifenden Anordnung angeordnet sind.

2. Verfahren nach Anspruch 1, wobei mindestens ein Prozessparametersatz (PPS1 - PPSn) aus der Vielzahl der Prozessparametersätze (PPS1 - PPSn) zu einem Kornwachstum in Aufbaurichtung des additiv herzustellenden dreidimensionalen Objekts (2) führt.

3. Verfahren nach Anspruch 1 oder 2, wobei mindestens ein Prozessparametersatz (PPS1 - PPSn) aus der Vielzahl der Prozessparametersätze (PPS1 - PPSn) zu einem Kornwachstum in einer Richtung quer zur Baurichtung des additiv herzustellenden dreidimensionalen Objekts (2) führt.

4. Verfahren nach einem der vorhergehenden Ansprüche, wobei durch die Verwendung der mindestens zwei unterschiedlichen Prozessparametersätze (PPS1 - PPSn) ein Gefüge erzeugt wird, das keine Gefüge-Gleitebenen für Mikrostrukturrisse oder zumindest weniger Gefüge-Gleitebenen für Mikrostrukturrisse aufweist als bei Verwendung von nur einem Prozessparametersatz.

5. Verfahren nach einem der vorhergehenden Ansprüche, ferner umfassend die Schritte:
- Bereitstellen mindestens eines Zielkriteriums für mindestens eine Schicht (3) des Aufbaumaterials (4), die mittels des mindestens einen Energiestrahls (5) sukzessive selektiv bestrahlt und verfestigt werden soll;
- Auswählen mindestens eines Prozessparametersatzes (PPS1 - PPSn) aus der Vielzahl der Prozessparametersätze (PPS1 - PPSn) auf Basis des mindestens einen Zielkriteriums;
- Verwenden des mindestens einen gewählten Prozessparametersatzes (PPS1 - PPSn) für die selektive Bestrahlung und Verfestigung mindestens einer Schicht (3) von Aufbaumaterial (4), das mittels mindestens eines Energiestrahls (5) verfestigt werden kann.

6. Verfahren nach Anspruch 5, wobei das Zielkriterium mindestens eines von einem Energieeintragskriterium, einem Verfestigungskriterium, einem Gefügekriterium oder einem Kornstrukturkriterium ist oder sich darauf bezieht.

7. Verfahren nach einem der vorhergehenden Ansprüche, wobei unterschiedliche Prozessparametersätze (PPS1 - PPSn) zur selektiven Verfestigung mindestens einer bestimmten Schicht (3) des Aufbaumaterials (4) verwendet werden.

8. Verfahren nach einem der vorhergehenden Ansprüche, wobei unterschiedliche Prozessparametersätze (PPS1 - PPSn) zur selektiven Verfestigung unterschiedlicher Schichten (3) des Aufbaumaterials (4) verwendet werden.

9. Verfahren nach einem der vorhergehenden Ansprüche, wobei unterschiedliche Prozessparametersätze (PPS1 - PPSn) für einen oder mehrere Bestrahlungspfadvektoren (V1 - V4) verwendet werden, die zur selektiven Bestrahlung und Konsolidierung mindestens einer bestimmten Schicht (3) des Aufbaumaterials (4) verwendet werden.

10. Verfahren nach einem der vorhergehenden Ansprüche, wobei ein Prozessparametersatz (PPS1 - PPSn) mindestens eine der folgenden Gruppen von Prozessparametern (PPS - PPn) umfasst: Strahlparameter und Schichtparameter.

11. Vorrichtung (1) zur additiven Herstellung mindestens eines dreidimensionalen Objekts (2) mittels sukzessiver schichtweiser selektiver Bestrahlung und Verfestigung von Schichten (3) aus Aufbaumaterial (4), die mittels mindestens eines Energiestrahls (5) verfestigt werden können, wobei die Vorrichtung (1) umfasst:
- eine Datenbereitstellungseinheit (10), die eine Vielzahl von Prozessparametersätzen (PPS1
- PPSn) bereitstellt, die jeweils eine Vielzahl von Prozessparametern (PP1 - PPn) umfassen, die eine selektive Verfestigung einer Schicht (3) aus Aufbaumaterial (4) ermöglichen, wobei jeder Prozessparametersatz (PPS1 - PPSn) zu spezifischen Eigenschaften der Mikrostruktur eines Bereichs der jeweiligen Schicht (3) aus Aufbaumaterial (4) führt, der auf der Grundlage des jeweiligen Prozessparametersatzes (PPS1 - PPSn) selektiv bestrahlt und verfestigt wurde; und
- eine Steuereinheit (11) zur Steuerung des Betriebs der Vorrichtung (1) derart, dass mindestens zwei unterschiedliche Prozessparametersätze (PPS1 - PPSn) der Vielzahl von Prozessparametersätzen (PPS1 - PPSn) zur additiven Herstellung mindestens eines dreidimensionalen Objekts (2) mittels der aufeinanderfolgenden schichtweisen selektiven Bestrahlung und Verfestigung von mittels mindestens eines Energiestrahls (5) verfestigbaren Schichten von Aufbaumaterial (4) verwendet werden; wobei
die Steuereinheit (11) dazu ausgebildet ist, unter Verwendung der mindestens zwei unterschiedlichen Prozessparametersätze (PPS1 - PPSn) eine ineinandergreifende Mikrostruktur zu erzeugen, bei der nebeneinander angeordnete Körner (13) in einer ineinandergreifenden Anordnung angeordnet sind.

## Revendications

1. Procédé de fabrication additive d'au moins un objet tridimensionnel (2) au moyen d'une irradiation et d'une consolidation sélectives par couches successives de couches (3) de matériau de construction (4) qui peuvent être consolidées au moyen d'au moins un faisceau d'énergie (5), comprenant les étapes consistant à:
- fournir une pluralité d'ensembles de paramètres de processus (PPS1 - PPSn) comprenant chacun une pluralité de paramètres de processus (PP1 - PPn) permettant une consolidation sélective d'une couche (3) de matériau de construction (4), moyennant quoi chaque ensemble de paramètres de processus (PPS1 - PPSn) résulte en des propriétés spécifiques de la microstructure d'une zone de la couche respective (3) de matériau de construction (4) qui a été sélectivement irradiée et consolidée sur la base de l'ensemble de paramètres de processus respectif (PPS1 - PPSn);
- l'utilisation d'au moins deux ensembles de paramètres de processus différents (PPS1 - PPSn) de la pluralité d'ensembles de paramètres de processus (PPS1 - PPSn) pour la fabrication additive d'au moins un objet tridimensionnel (2) au moyen de l'irradiation et de la consolidation sélectives par couches successives de couches (3) de matériau de construction (4) qui peuvent être consolidées au moyen d'au moins un faisceau d'énergie (5); dans lequel une microstructure d'emboîtement dans laquelle des grains (13) disposés de manière adjacente sont disposés dans un arrangement d'emboîtement est générée en utilisant les au moins deux ensembles de paramètres de processus différents (PPS1 - PPSn).

2. Procédé selon la revendication 1, dans lequel au moins un jeu de paramètres de traitement (PPS1 - PPSn) de la pluralité de jeux de paramètres de traitement (PPS1 - PPSn) entraîne une croissance des grains dans la direction de construction de l'objet tridimensionnel (2) qui doit être fabriqué de manière additive.

3. Procédé selon la revendication 1 ou 2, dans lequel au moins un ensemble de paramètres de traitement (PPS1 - PPSn) de la pluralité d'ensembles de paramètres de traitement (PPS1 - PPSn) entraîne une croissance des grains dans une direction transversale à la direction de construction de l'objet tridimensionnel (2) qui doit être fabriqué de manière additive.

4. Procédé selon l'une quelconque des revendications précédentes, dans lequel une microstructure n'ayant aucun plan de glissement microstructurel pour des fissures microstructurelles ou au moins moins de plans de glissement microstructurels pour des fissures microstructurelles par rapport à l'utilisation d'un seul ensemble de paramètres de processus est générée en utilisant les au moins deux ensembles de paramètres de processus différents (PPS1 - PPSn).

5. Procédé selon l'une quelconque des revendications précédentes, comprenant en outre les étapes consistant à:
- fournir au moins un critère cible pour au moins une couche (3) de matériau de construction (4) qui doit être successivement irradiée et consolidée sélectivement au moyen du au moins un faisceau d'énergie (5);
- choisir au moins un ensemble de paramètres de processus (PPS1 - PPSn) de la pluralité d'ensembles de paramètres de processus (PPS1 - PPSn) sur la base de l'au moins un critère cible;
- utiliser le au moins un ensemble de paramètres de processus choisi (PPS1 - PPSn) pour l'irradiation et la consolidation sélectives d'au moins une couche (3) de matériau de construction (4) qui peut être consolidée au moyen d'au moins un faisceau d'énergie (5).

6. Procédé selon la revendication 5, dans lequel le critère cible est ou fait référence à au moins un critère d'apport d'énergie, un critère de consolidation, un critère de microstructure ou un critère de structure de grain.

7. Procédé selon l'une quelconque des revendications précédentes, dans lequel différents jeux de paramètres de traitement (PPS1 - PPSn) sont utilisés pour consolider sélectivement au moins une couche spécifique (3) de matériau de construction (4).

8. Procédé selon l'une quelconque de la revendication précédente, dans lequel différents ensembles de paramètres de traitement (PPS1 - PPSn) sont utilisés pour consolider sélectivement différentes couches (3) de matériau de construction (4).

9. Procédé selon l'une quelconque des revendications précédentes, dans lequel différents ensembles de paramètres de traitement (PPS1 - PPSn) sont utilisés pour un ou une pluralité de vecteurs de trajet d'irradiation (V1 - V4) utilisés pour irradier et consolider sélectivement au moins une couche spécifique (3) de matériau de construction (4).

10. Procédé selon l'une quelconque des revendications précédentes, dans lequel un ensemble de paramètres de traitement (PPS1 - PPSn) comprend au moins l'un des groupes suivants de paramètres de traitement (PPS - PPn): paramètres de faisceau et paramètres de couche.

11. Appareil (1) pour la fabrication additive d'au moins un objet tridimensionnel (2) au moyen d'une irradiation et d'une consolidation sélectives par couches successives de couches (3) de matériau de construction (4) qui peuvent être consolidées au moyen d'au moins un faisceau d'énergie (5), l'appareil (1) comprenant:
- une unité de fourniture de données (10) fournissant une pluralité d'ensembles de paramètres de traitement (PPS1 - PPSn) comprenant chacun une pluralité de paramètres de traitement (PP1 - PPn) permettant une consolidation sélective d'une couche (3) de matériau de construction (4), moyennant quoi chaque ensemble de paramètres de traitement (PPS1 - PPSn) résulte en des propriétés spécifiques de la microstructure d'une zone de la couche respective (3) de matériau de construction (4) qui a été sélectivement irradiée et consolidée sur la base de l'ensemble de paramètres de traitement respectif (PPS1 - PPSn); et
- une unité de commande (11) pour commander le fonctionnement de l'appareil (1) de telle sorte qu'au moins deux ensembles de paramètres de processus différents (PPS1 - PPSn) de la pluralité d'ensembles de paramètres de processus (PPS1 - PPSn) soient utilisés pour la fabrication additive d'au moins un objet tridimensionnel (2) au moyen de l'irradiation et de la consolidation sélectives par couches successives de couches de matériau de construction (4) qui peuvent être consolidées au moyen d'au moins un faisceau d'énergie (5); dans lequel l'unité de commande (11) est configurée pour générer une microstructure d'embo tement dans laquelle des grains (13) disposés de manière adjacente sont disposés dans un arrangement d'embo tement en utilisant les au moins deux ensembles de paramètres de processus différents (PPS1 - PPSn).
